# EUROPÄISCHE PATENTSCHRIFT

(11) **EP 3 455 290 B1**
(45) Veröffentlichungstag und Bekanntmachung des Hinweises auf die Patenterteilung: **11.03.2020**
(21) Anmeldenummer: 17720799.0
(22) Anmeldetag: 03.05.2017
(51) Int. Cl.: C08K 5/29, C08L 27/06, C08K 5/10, C08K 5/00, C08K 5/105, C08L 29/14

(54) **ZUSAMMENSETZUNGEN ENTHALTEND CARBODIIMID, ESTER UND PVC, DEREN HERSTELLUNG UND VERWENDUNG**
COMPOSITIONS CONTAINING CARBODIIMIDE, ESTER AND PVC, THEIR PREPARATION AND USE
COMPOSITIONS DE CARBODIIMIDE, D'ESTER ET DE PVC, LEUR FABRICATION ET UTILISATION

(30) Priorität: 09.05.2016 EP 16168729; 11.05.2016 EP 16169225
(43) Veröffentlichungstag der Anmeldung: 20.03.2019
(73) Patentinhaber: LANXESS Deutschland GmbH, 50569 Köln (DE)
(72) Erfinder: LAUFER, Wilhelm, 67158 Ellerstadt (DE); FACKLAM, Thomas, 51375 Leverkusen (DE)
(86) Internationale Anmeldenummer: PCT/EP2017/060458
(87) Internationale Veröffentlichungsnummer: WO 2017/194360

(56) Entgegenhaltungen:
- WO-A1-2014/184116
- WO-A1-2016/026838

## Beschreibung

Die vorliegende Erfindung betrifft Zusammensetzungen enthaltend Carbodiimid, Ester und PVC, deren Herstellung und Verwendung.

Mit dem Begriff "Weichmacher" (engl.: "plasticizer") werden in der chemisch-technischen Literatur Substanzen bezeichnet, die in der Lage sind, einen harten, spröden Stoff allein durch ihre Zumischung in eine weiche, dehnbare, zähe oder elastische Zubereitung zu überführen. Der Begriff wird in sehr vielen, unterschiedlichen Zusammenhängen verwendet. So ist er in der Betonverarbeitung (siehe zum Beispiel WO 98 58 887 A1) ebenso üblich, wie bei der Herstellung von Raketentreibstoffen (siehe zum Beispiel US 3,617,400). Im engeren Sinne werden mit dem Begriff "Weichmacher" in der Polymerverarbeitung eingesetzte Additive bezeichnet, die die mechanischen Eigenschaften von thermoplastischen Polymeren im oben genannten Sinne verändern können. Beispiele für Polymere, die mit Weichmachern verarbeitet werden, sind Polyvinylchlorid, Vinylchloridbasierte Copolymere, Polyvinylidenchlorid, Polyvinylacetate, Polyvinylbutyral, Polyacrylate, Polyamide, Polylactide, Polyurethan, Cellulose und seine Derivate und Kautschukpolymere, wie Acrylnitrilbutadienkautschuk, Chloroprenkautschuk, Styrolbutadienkautschuke, chloriertes Polyethylen, Ethylen-Propylen-Kautschuk, Acrylatkautschuk, Naturkautschuk und/oder Epichlorhydrinkautschuk. Bevorzugt ist Polyvinylchlorid.

Diverse Ester, wie beispielsweise Alkylester der Benzoesäure, Dialkylester aliphatischer Dicarbonsäuren, wie z.B. Adipinsäurediester, Polyester von aliphatischen Dicarbonsäuren mit aliphatischen Di-, Tri- und Tetrolen, deren Endgruppen unverestert oder mit monofunktionellen Reagenzien, bevorzugt Monoalkoholen oder Monocarbonsäuren, verestert sind und deren zahlenmittlere Molmasse 1 000 - 20 000 g/mol beträgt, Trialkylester der Zitronensäure, acetylierte Trialkylester der Zitronensäure, Glycerinester, Benzoesäurediester von Mono-, Di-, Tri- oder Polyalkylenglycolen, Trimethylolpropanester, Pentaerythritolester, Dialkylester von Cyclohexandicarbonsäuren, Dialkylester der Terephthalsäure, Dialkylester der Phthalsäure, Trialkylester der Trimellitsäure, Carbonsäureester von Polyolen, Triarylester der Phosphorsäure, Diarylalkylester der Phosphorsäure, Trialkylester der Phosphorsäure, oder Arylester von Alkansulfonsäuren sind dem Fachmann als Weichmacher für diverse thermoplastischen Polymere, sogenannte thermoplastische Kunststoffe bekannt.

Werden diese alleine eingesetzt, kann es im Kunststoff allerdings zu Stabilitätsproblemen führen. Hierbei spielt die Hydrolyse der als Weichmacher eingesetzten Ester durch Umgebungsfeuchtigkeit eine Rolle.

Diverse Carbodiimide haben sich in vielen Anwendungen bewährt, z.B. als Hydrolyseschutzmittel für thermoplastische Kunststoffe, Ester-basierte Polyole, Polyurethane, Triglyceride und Schmierstofföle etc. Sie haben allerdings den Nachteil von Emission von gesundheitsbedenklichen Gasen.

Aufgabe der vorliegenden Erfindung war es daher, neue Zusammensetzungen bereitzustellen, die hydrolysebeständig und wenig flüchtig sind, somit Emissionen vermeiden und sich als Weichmacher für Kunststoffe, insbesondere PVC eignen, ohne dass diese dabei ihren sonstigen prägenden Eigenschaften verlieren.

Überraschenderweise wurde nun gefunden, dass die vorgenannten Aufgaben erfüllt sind, wenn eine Kombination bestimmter Ester, ausgewählt aus der Gruppe der
Ester der Benzoesäure, vorzugsweise Alkylester der Benzoesäure, Benzoesäuremonoester von C₈-C₁₂-Monoalkoholen, und Benzoesäurediester von Mono-, Di-, Tri- oder Polyalkylenglycolen,
Dialkylester aliphatischer Dicarbonsäuren,
Trialkylester aliphatischer Tricarbonsäuren, vorzugsweise der Zitronensäure, sowie acetylierte Trialkylester der Zitronensäure,
Dialkylester oder Trialkylester von aromatischen Di- oder Tricarbonsäuren, vorzugsweise der Terephthalsäure, der Phthalsäure oder der Trimellitsäure,
Dialkylester von Cyclohexandicarbonsäuren,
Polyester oder Carbonsäureester von aliphatischen Dicarbonsäuren, mit- aliphatischen Di, Tri- und Tetrolen oder Polyolen, deren Endgruppen unverestert oder mit monofunktionellen Verbindungen, bevorzugt Monoalkoholen oder Monocarbonsäuren, verestert sind und deren zahlenmittlere Molmasse vorzugsweise 1 000 - 20 000 g/mol beträgt,
Glycerinester,
Trimethylolpropanester,
Pentaerythritolester,
Diarylalkylester, Triarylester und/oder Trialkylester der Phosphorsäure oder
Arylester von Alkansulfonsäuren
mit bestimmten Carbodiimiden eingesetzt wird.

Gegenstand der vorliegenden Erfindung sind daher Zusammensetzungen, enthaltend
(a) mindestens ein polymeres aromatisches Carbodiimid, der Formel (I)

   R⁴-R⁸-(-N=C=N-R⁸-)ₘ-R⁴ (I),

   in dem
   - m: einer ganzen Zahl von 2 bis 500, bevorzugt 3 bis 20, ganz besonders bevorzugt 4 bis 10 entspricht,
   - R⁸: C₁-C₁₂-Alkyl- substituierte Arylene, C₇-C₁₈ -Alkylaryl-substituierte Arylene sowie gegebenenfalls C₁-C₁₂-Alkyl- substituierte über Alkylengruppen verbrückte Arylene, die in Summe 7 bis 30 Kohlenstoffatome aufweisen sowie Arylen, und
   - R⁴: -NCO, -NCNR⁵, -NHCONHR⁵, -NHCONR⁵R⁶ oder -NHCOOR⁷ ist,
   wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder einem Alkoxypolyoxyalkylenrest entspricht, und
(b) mindestens einen oder mehrerer Ester ausgewählt aus der Gruppe der C₉-C₁₀-Alkylester der Benzoesäure, Di- (C₈-C₁₂)- Alkylester aliphatischer Dicarbonsäuren, vorzugsweise Bernsteinsäure, Adipinsäure und/oder Sebazinsäure, Polyester von verzweigten oder unverzweigten C₂ bis C₈ aliphatischen Dicarbonsäuren, vorzugsweise Bernsteinsäure, Adipinsäure und/oder Sebazinsäure oder Gemische dieser Dicarbonsäuren, mit verzweigten oder unverzweigten C₂-C₈- aliphatischen Dioleoder Polyole, oder deren Gemische, deren Endgruppen unverestert oder mit monofunktionellen Verbindungen, bevorzugt C₄-C₁₀-Monoalkoholen oder C₂-C₁₈- Monocarbonsäuren, verestert sind und deren zahlenmittlere Molmasse vorzugsweise 1.000 - 20.000 g/mol beträgt, Tri(C₂-C₆)-alkylester der Zitronensäure, acetylierte Tri(C₂-C₆)-alkylester der Zitronensäure, Glycerinester, Benzoesäurediester von Mono-, Di-, Tri- oder Poly(C₂-C₃)-alkylenglycolen, Trimethylolpropanester, Pentaerythritolester, Di(C₈-C₁₂)-alkylester von Cyclohexandicarbonsäuren, Di(C₈-C₁₂)-alkylester der Terephthalsäure, Di(C₈-C₁₂)-alkylester der Phthalsäure, Tri(C₈-C₁₂)-alkylester der Trimellitsäure, Carbonsäureester von Polyolen, wie z.B. Tetra(C₄-C₈)-carbonsäureester des Pentaerythritols, Tri(C₆-C₁₀)-arylester der Phosphorsäure, Di(C₆-C₁₀)-aryl(C₈-C₁₂)-alkylester der Phosphorsäure, Tri(C₈-C₁₂)-alkylester der Phosphorsäure, oder (C₆-C₁₀)-Arylester von C₁₀-C₂₁-Alkansulfonsäuren und
(c) Polyvinylchlorid oder Polyvinylbutyral, insbesondere Polyvinylchlorid.

Im Rahmen der Erfindung sind weitere Kunststoffe als Komponente (c) möglich, die ausgewählt sind aus der Reihe der Homo- und Copolymeren auf Basis von Ethylen, Propylen, Butadien, Polyvinylchlorid Styrol oder Acrylnitril. Besonders bevorzugt sind chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere.

Im Sinne der Erfindung ist der Begriff über Alkylengruppen verbrückte Arylene vorzugsweise so zu verstehen, dass die jeweiligen -N=C=N- Gruppen des Carbodimids über -Arylen (AR)-Alkylen (Alk)-Arylen (AR)- miteinander verknüpft sind, gemäß -N=C=N-AR-(Alk)-AR-N=C=N-.

In einer bevorzugten Ausführungsform der Erfindung enthält die erfindungsgemäße Zusammensetzung als Komponente c) Polyvinylchlorid oder Polyvinylbutyral, besonders bevorzugt Polyvinylchlorid.

Als polymere aromatische Carbodiimide (a) sind Carbodiimide mit endständigen Harnstoff- und/oder Urethangruppen der Formel 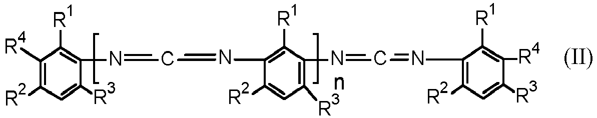 bevorzugt,
bei denen R⁴ gleich oder verschieden sein kann und ausgewählt ist aus der Gruppe der -NHCONHR⁵, -NHCONR⁵R⁶ oder -NHCOOR⁷,
wobei R⁵ und R⁶ gleich oder verschieden sind und einen C₁-C₁₂-Alkyl-, C₆-C₁₂-Cycloalkyl-, C₇ - C₁₈ -Aralkylrest - oder Arylrest darstellen
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 Kohlenstoffatomen, bevorzugt 12-20, besonders bevorzugt 16-18 Kohlenstoffatomen, oder einem Alkoxypolyoxyalkylenrest entspricht,
R¹, R² und R³ jeweils unabhängig für Methyl- oder Ethyl steht, wobei jeder Benzolring nur eine Methyl-Gruppe aufweist und n = 1 bis 10 bedeutet.

Bevorzugt sind Carbodiimide der Formel (II) mit R⁴ = -NHCOOR⁷, wobei R⁷ ein Alkoxypolyoxyalkylenrest ist, R¹, R² und R³ jeweils unabhängig für Methyl- oder Ethyl steht, wobei jeder Benzolring nur eine Methyl-Gruppe aufweist und n = 1 bis 10, bevorzugt n = 1 bis 4, besonders bevorzugt n = 1 bis 3 ist.

Bevorzugte Alkoxypolyoxyalkylenreste sind Polyethylenglykolmonomethylether mit Molmassen von 200 - 600 g/mol, besonders bevorzugt von 350 - 550 g/mol.

Der Carbodiimid-Gehalt (NCN-Gehalt, gemessen durch Titration mit Oxalsäure) der erfindungsgemäß eingesetzten Carbodiimide der Formel (II) liegt vorzugsweise bei 2 - 10 Gew.%, bevorzugt 4 - 8 Gew.%, besonders bevorzugt bei 5 - 7 Gew.%.

Die erfindungsgemäß eingesetzten Carbodiimide der Formel (II) weisen darüber hinaus vorzugsweise mittlere Molmassen (Mw) von 1000 - 5000 g/mol, bevorzugt 1500 - 4000 g/mol, besonders bevorzugt 2000 - 3000 g/mol auf, bestimmt mittels GPC-Viskometrie.

Weiterhin sind Carbodiimide der Formel (II) bevorzugt, die eine Polydispersität D = Mw/Mn von 1,2 - 2,2, besonders bevorzugt von 1,4 - 1,8 aufweisen.

In einer weiteren bevorzugten Ausführungsform der Erfindung sind Carbodiimide mit endständigen Harnstoff- und oder Urethangruppen der Formel (III) bevorzugt 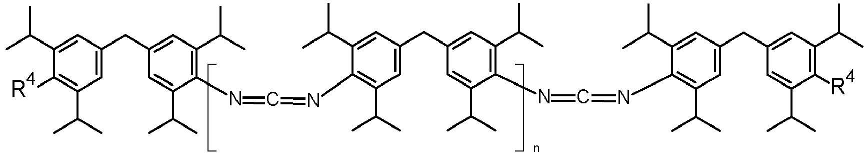 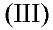 in der
R⁴ ausgewählt ist aus der Gruppe der -NHCONHR⁵, -NHCONR⁵R⁶ oder -NHCOOR⁷ ,
wobei R⁵ und R⁶ gleich oder verschieden sind und einen C₁-C₁₂-Alkyl-, C₆-C₁₂-Cycloalkyl-, C₇-C₁₈-Aralkylrest - oder C₆-C₁₈-Arylrest darstellen,
R⁷ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen, bevorzugt 12-20, besonders bevorzugt 16-18 Kohlenstoffatomen, oder einem Alkoxypolyoxyalkylenrest entspricht, und
n = 1 bis 20, bevorzugt n = 1 bis 15 ist.
Der Carbodiimid-Gehalt (NCN-Gehalt, gemessen durch Titration mit Oxalsäure) der erfindungsgemäßen Carbodiimide insbesondere der Formel (III) liegt vorzugsweise bei 2 - 10 Gew.%.

Bevorzugte Alkoxypolyoxyalkylenreste sind Polyethylenglykolmonomethylether mit Molmassen von 200 - 600 g/mol, besonders bevorzugt von 350 - 550 g/mol.

Bevorzugt sind Carbodiimide der Formel (III) mit R = -NHCOO⁷-Rest mit R⁷ ein Alkoxypolyoxyalkylen oder ein ungesättigter Alkylrest mit 18 Kohlenstoffatomen ist, und n= 0 bis 20, bevorzugt n = 1 bis 10, besonders bevorzugt n = 2 bis 8, ganz besonders bevorzugt n = 3 bis 6.

Der Carbodiimid-Gehalt dieser bevorzugten Carbodiimide der Formel (III) liegt vorzugsweise bei 2 -8 Gew.%, besonders bevorzugt bei 3 - 6 Gew.%, ganz besonders bevorzugt bei 4 - 5 Gew.%.

Die erfindungsgemäßen Carbodiimide insbesondere der Formel (III) weisen darüber hinaus vorzugsweise mittlere Molmassen (Mw) von 1000 - 10000 g/mol, bevorzugt 2000 - 8000 g/mol, besonders bevorzugt 3000 - 6000 g/mol auf, bestimmt mittels GPC-Viskometrie.

Bei den erfindungsgemäßen Carbodiimiden handelt es sich um kommerziell verfügbare Verbindungen. Sie können aber auch beispielsweise nach den in der EP14191710.4 beschriebenen Verfahren hergestellt werden.

Als Komponente b) eingesetzte Ester im Sinne der Erfindung sind bevorzugt Polyester von 1,2-Propandiol und/oder 1,3- und/oder 1,4-Butandiol und/oder Diethylenglykol und/oder Dipropylenglykol und/oder Polypropylenglykol und/oder Glyzerin und/oder Pentaerythritol mit Adipinsäure und/oder Sebazinsäure und/oder Bernsteinsäure, auch mit endständiger Essigsäure, und/oder C₁₀-C₁₈-Fettsäuren, und/oder 2-Ethylhexanol, und/oder Isononanol und/oder n-Octanol und/oder n-Decanol sowie Di (2-ethylhexyl) adipat, Di isononyl adipat, Di isononyl phthalat, Di propylheptyl phthalat, 1,2-Cyclohexandicarbonsäurediisononylester, 1,2-Cyclohexandicarbonsäuredi(2-ethylhexyl)ester, Pentaerythritol tetravalerat, Di (2-ethylhexyl) terephthalat, Tri (2-ethylhexyl) trimellitat, Diphenyl isodecyl phosphat, Diphenyl 2-ethylhexyl phosphat, Isopropylphenyl diphenyl phosphat, tert. Butylphenyl diphenyl phosphat und (C₁₀-C₂₁)Alkansulfonsäure-phenylester. Die Komponenten (b) und (a) werden dabei vorzugsweise in einem Verhältnis von 200 : 1 bis 10 : 1 Gewichtsteilen, bevorzugt 50:1 bis 20 :1 Gewichtsteilen, besonders bevorzugt 40 : 1 bis 30 : 1 Gewichtsteilen eingesetzt.

Bei dem im Sinne der Erfindung eingesetzten Polyvinylchloriden oder Polyvinylbutyralen c) handelt es sich vorzugsweise um handelsübliches Polymere, wie sie beispielsweise bei der Inovyn Deutschland GmbH kommerziell erhältlich ist. Das in der erfindungsgemäßen Zusammensetzung enthaltene Polyvinylchlorid wird vorzugsweise durch Homopolymerisation aus Vinylchlorid nach dem Fachmann bekannten Methoden wie der Suspensions-, der Microsuspensions-, der Emulsions- oder der Massepolymerisation hergestellt. In einer weiteren bevorzugten Ausführungsform der Erfindung enthält die Zusammensetzung zudem Zusatzstoffe d).
In diesen Fällen, in denen die Polyvinylchlorid oder Polyvinylbutyral c), polymeres aromatisches Carbodiimid a), mindestens einen oder mehrerer Ester b) sowie gegebenenfalls weitere Zusatzstoffe d) entfällt, weist diese
vorzugsweise 200 Gewichtsteile eines oder mehrerer Ester b) : 1 Gewichtsteil polymerem aromatischem Carbodiimid a)
bis 10 Gewichtsteile eines oder mehrerer Ester b) : 1 Gewichtsteil polymerem aromatischem Carbodiimid a) auf und
die Summe aus polymerem aromatischem Carbodiimid a) und einen oder mehrerer Ester (Weichmacher) b) entspricht einer Menge von 10 - 100 Gewichtsteilen pro 100 Gewichtsteile Polyvinylchlorid.

In einer weiteren bevorzugten Ausführungsform enthält die Polyvinylchlorid-haltige Zusammensetzung
vorzugsweise 40 Gewichtsteile eines oder mehrerer Ester b) : 1 Gewichtsteil polymerem aromatischem Carbodiimid a),
bis 30 Gewichtsteile eines oder mehrerer Ester b) : 1 Gewichtsteil polymerem aromatischem Carbodiimid c), wobei
die Summe aus polymerem aromatischem Carbodiimid a) und eines oder mehrerer Ester (Weichmacher) b) einer Menge von 10 - 100 Gewichtsteilen pro 100 Gewichtsteile Polyvinylchlorid entspricht.

In einer weiteren Ausführungsform betrifft die vorliegende Erfindung eine Zusammensetzung enthaltend a) und b) Polyvinylchlorid oder Polyvinylbutyral c), und einen oder mehrere Zusatzstoffe d) ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller und Antistatika, wie beispielsweise Natrium-(C₁₃-C₁₇)-Alkylsulfonate und Glycerinmonooleat.

Bevorzugt ist dabei eine Zusammensetzung enthaltend a) und b), Polyvinylchlorid oder Polyvinylbutyral c), und einen oder mehrere Zusatzstoffe d) ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller und Antistatika, wie beispielsweise Natrium-(C₁₃-C₁₇)-Alkylsulfonate und Glycerinmonooleat.

Diese Zusatzstoffe d) können in beliebiger Kombination enthalten sein. Im Folgenden werden einige geeignete Zusatzstoffe näher beschrieben. Die aufgeführten Beispiele stellen jedoch keine Einschränkung der erfindungsgemäßen Polyvinylchlorid-Zubereitung dar, sondern dienen lediglich der Erläuterung. Alle %-Angaben beziehen sich auf das Gewicht der gesamten Polyvinylchlorid-Zubereitung im Fall der Polyvinylchlorid-haltigen Zusammensetzung, ansonsten auf das Gewicht der Zusammensetzung aus den Komponenten a) und b).

Die nachstehend genannten Zusatzstoffe d), wie vorzugsweise Stabilisatoren, Gleitmittel, Weichmachern, Füllstoffe, Pigmente, Flammschutzmittel, Lichtstabilisatoren, Treibmittel, polymere Verarbeitungshilfsmittel und/oder Schlagzähverbesserer sind somit auch in Kombination mit a) und b) ohne die Anwesenheit von Polyvinylchlorid oder Polyvinylbutyral c) einsetzbar, PVC-Stabilisatoren neutralisieren die während und/oder nach der Verarbeitung des Polyvinylchlorid abgespaltene Salzsäure. Als PVC-Stabilisatoren kommen alle üblichen Polyvinylchlorid-Stabilisatoren in fester und flüssiger Form in Betracht, beispielsweise Epoxy/Zink-, Ca/Zn-, Ba/Zn-, Pb- oder Sn-Stabilisatoren sowie metallfreie Stabilisatoren und auch säurebindende Schichtsilikate wie Hydrotalcit. Erfindungsgemäße, vorzugsweise Polyvinylchlorid-haltige, Zusammensetzungen können vorzugsweise 0 - 7 %, bevorzugt 0,1 - 5 %, besonders bevorzugt 0,2 - 4 % und insbesondere 0,5 - 3 % Stabilisatoren enthalten.

In einer weiteren bevorzugten Ausführungsform sollen Gleitmittel zwischen den Polyvinylchlorid-Partikeln wirksam werden und Reibungskräften beim Mischen, Plastifizieren und Verformen entgegenwirken. Als Gleitmittel kann die erfindungsgemäße Polyvinylchlorid-haltige Zusammensetzungen alle für die Verarbeitung von Kunststoffen üblichen Gleitmittel enthalten, bevorzugt Kohlenwasserstoffe, besonders bevorzugt Öle, Paraffine und PE-Wachse, Fettalkohole mit 6 bis 20 C- Atomen, Ketone, Carbonsäuren, bevorzugt Fettsäuren oder Montansäuren, oxidiertes PE-Wachs, Metallsalze von Carbonsäuren, Carbonsäureamide sowie Carbonsäureester, bevorzugt mit den Alkoholen Ethanol, Fettalkoholen, Glycerin, Ethandiol, Pentaerythrit oder langkettigen Carbonsäuren als Säurekomponente. Die erfindungsgemäßen, vorzugsweise Polyvinylchlorid-haltigen, Zusammensetzungen enthalten vorzugsweise 0 - 10 %, bevorzugt 0,05 - 5 %, besonders bevorzugt 0,1 - 3 % und insbesondere von 0,2 - 2 % Gleitmittel.

In einer weiteren bevorzugten Ausführungsform beeinflussen Füllstoffe vor allem die Druck-, Zug- und Biegefestigkeit sowie die Härte und Wärmeformbeständigkeit von weichgemachtem Polyvinylchlorid in positiver Weise. Die erfindungsgemäßen, vorzugsweise Polyvinylchlorid-haltigen, Zusammensetzungen können als Füllstoffe Ruß, natürliche Calciumcarbonate, wie beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat, andere anorganische Füllstoffe und organische Füllstoffe, wie Holzmehl, -späne, oder -fasern enthalten. Vorzugsweise werden als Füllstoffe Calciumcarbonate, Kreide, Dolomit, Kaolin, Silikate, Talkum oder Ruß eingesetzt. Die erfindungsgemäße, vorzugsweise Polyvinylchlorid-haltige, Zusammensetzung enthält vorzugsweise 0 - 80 %, bevorzugt 0,1 - 60 %, besonders bevorzugt 0,5 - 50 % und insbesondere 1 - 40 % Füllstoffe.

Die erfindungsgemäßen, vorzugsweise Polyvinylchlorid-haltigen Zusammensetzungen können auch Pigmente enthalten, um das erhaltene Produkt farblich an unterschiedliche Einsatzmöglichkeiten anzupassen. Dazu werden sowohl anorganische Pigmente als auch organische Pigmente eingesetzt. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht. Die erfindungsgemäße, vorzugsweise Polyvinylchlorid-haltige, Zusammensetzung enthält vorzugsweise 0 - 10 %, bevorzugt 0,05 - 5 %, besonders bevorzugt 0,1 - 3 % und insbesondere von 0,5 - 2 % Pigmente.

Um die Entflammbarkeit zu vermindern und die Rauchentwicklung beim Verbrennen zu verringern, können die erfindungsgemäßen, vorzugsweise Polyvinylchlorid-haltigen, Zusammensetzungen auch Flammschutzmittel enthalten. Als Flammschutzmittel werden bevorzugt Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet. Die erfindungsgemäße, vorzugsweise Polyvinylchlorid-haltige, Zusammensetzung enthält vorzugsweise 0 - 30 %, bevorzugt 0,1 - 25 %, besonders bevorzugt 0,2 - 20 % und insbesondere 0,5 - 15 % Flammschutzmittel.

Um Artikel, die aus der erfindungsgemäßen Polyvinylchlorid-Zubereitung hergestellt wurden vor einer Schädigung durch den Einfluss von Licht zu schützen, können Lichtstabilisatoren zugesetzt werden. Dazu werden bevorzugt Hydroxybenzophenone oder Hydroxyphenylbenzotriazole eingesetzt. Die erfindungsgemäße vorzugsweise, Polyvinylchlorid-haltige, Zusammensetzung enthält vorzugsweise 0 - 7 %, bevorzugt 0,1 - 5 %, besonders bevorzugt 0,2 - 4 % und insbesondere 0,5 - 3 % Lichtstabilisatoren.

Die erfindungsgemäße, vorzugsweise Polyvinylchlorid-haltige, Zusammensetzung kann zur Herstellung von Schaumstoffen unter Verwendung von Treibmitteln verwendet werden. Dazu werden dieser Zusammensetzung vorzugsweise chemisch oder physikalisch wirkende Treibmittel zugefügt. Als chemisch wirkende Treibmittel kommen alle für diesen Zweck bekannten Substanzen in Betracht, bevorzugt Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitrosopentamethylentetramin, Zinkcarbonat oder Natriumhydrogencarbonat sowie diese Substanzen enthaltende Mischungen. Als physikalisch wirkende Treibmittel sind bevorzugt Kohlendioxid oder Halogenkohlenwasserstoffe geeignet. Die erfindungsgemäße, vorzugsweise Polyvinylchlorid-haltige Zusammensetzung enthält vorzugsweise 0 - 20 %, bevorzugt 0,05 - 15 %, besonders bevorzugt 0,1 - 10 % und insbesondere 0,7 - 3 % Treibmittel.

Die erfindungsgemäße, vorzugsweise Polyvinylchlorid-haltige, Zusammensetzung kann auch weitere Kunststoffe enthalten, die beispielsweise als polymere Verarbeitungshilfsmittel oder Schlagzähverbesserer wirken. Diese weiteren Kunststoffe werden vorzugsweise ausgewählt aus der Reihe der Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C1- bis C10-Alkoholen, Styrol oder Acrylnitril. Besonders bevorzugt sind Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methyl-methacrylat-Butylacrylat-Copolymere, Methyl-methacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Bei ihrem Einsatz, insbesondere als Weichmacher, verfügen die erfindungsgemäßen Zusammensetzungen aus a) und b) über gute anwendungstechnische Eigenschaften, insbesondere erlauben sie die emissionsarme Herstellung des weichgemachten Endproduktes. Der Einsatz der erfindungsgemäßen Zusammensetzungen in weichgemachten Kunststoffen, vorzugsweise Polyvinylchlorid c), ermöglicht, bedingt durch die Stabilisierung gegen Hydrolyse des Esters b), die Herstellung langlebiger Produkte.

Die erfindungsgemäßen Zusammensetzungen lassen sich in bekannter Art und Weise durch Mischen der Komponenten a) und b) und mindestens einem Polyvinylchlorid oder Polyvinylbutyral c) und gegebenenfalls mindestens einem Zusatzstoff d) in einer Mischapparatur, vorzugsweise in Rühr- und Mischwerken, Verdünnungsanlagen und statischen Mischern, in den für diese Komponenten angegebenen Mengenverhältnissen herstellen. Dabei können die Komponenten a) und b) der erfindungsgemäßen Zusammensetzung zuerst gemischt werden und dann mit den eingesetzten Komponenten c) und gegebenenfalls d) gemischt werden oder es können jeweils die Komponenten a) und b) getrennt zu den Komponenten c) und gegebenenfalls d) gegeben werden und dann gemischt werden.

Die erfindungsgemäßen Polyvinylchlorid-Zusammensetzungen können als Trockenmischung, dry blends, oder Flüssigmischungen, Pasten, gemischt und gegebenenfalls nach einer zusätzlichen Aufarbeitung zum Granulat weiter verarbeitet werden.

Derartige Verarbeitungsprozesse sind, nicht einschränkend, Extrudieren, Spritzgießen, Spritzen, Kalandrieren, Rotationsformen, Tauchen, Streichen, Beschichten, Sintern, und Gießen.

Gegenstand der vorliegenden Erfindung ist auch ein Verfahren zur Herstellung von Kunststoff, insbesondere Polyvinylchlorid, das dadurch gekennzeichnet ist, dass mindestens ein Kunststoff, insbesondere Polyvinylchlorid c), mit einer erfindungsgemäßen Zusammensetzung enthaltend a) und b) in einer Mischvorrichtung gemischt und homogenisiert wird, anschließend die Mischung geformt wird, insbesondere durch Extrudieren, Spritzgießen, Spritzen, Kalandrieren, Rotationsformen, Tauchen, Streichen, Beschichten, Sintern oder Gießen ausgeformt und die geformte Mischung dann erhitzt wird, vorzugsweise auf eine Temperatur im Bereich von 150 bis 220 °C.

Die mittels der erfindungsgemäßen Zusammensetzungen hergestellten Kunststoffe, insbesondere Polyvinylchlorid c), sind ebenfalls Gegenstand der vorliegenden Erfindung.

Diese erfindungsgemäßen Kunststoffe insbesondere aus insbesondere Polyvinylchlorid können weiterverarbeitet werden. Solche Endprodukte sind insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.

Ein weiterer Gegenstand der vorliegenden Erfindung ist zudem die Verwendung der erfindungsgemäßen Zusammensetzung zur Herstellung der genannten Endprodukte.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Bestimmung der Hydrolysestabilität:

In einer Porzellanschale wurden 100 g Polyvinylchlorid c) (Vinnolit® S4170, Vinnolit GmbH & Co. KG, Deutschland), mit 60 phr (Gewichtsteile pro 100 Gewichtsteile PVC) einem Polyester aus Adipinsäure und 1,2-Propandiol/Butandiol und 2-Ethylhexanol (10 Teile Adipinsäure, 10,6 Teile Diol (aus 5,3 Teilen 1,2 Propandiol und 5,3 Teilen 1,4-Butandiol) und 1 Teil Ethylhexanol mit einem mittleren Molgewicht von etwa Mw= 7.500 g/mol) b), Viskosität 12.000 mPas bei 23°C) und 2 Teilen eines polymeren aromatischen Carbodiimides CDI 1 bzw. CDI 2 mit CDI 2 = Carbodiimid der Formel (II) mit n = ca. 4 und R¹,R²,R³ = jeweils unabhängig für Methyl- oder Ethyl, wobei jeder Benzolring nur eine Methyl-Gruppe aufweist, R⁴ = -NHCOOR⁷ mit R⁷ = Cyclohexyl und CDI 1 = Carbodiimid der Formel (III) mit n = ca. 4 und R⁴ = -NHCOOR⁷ mit R⁷ = Cyclohexyl und 3 phr PVC-Stabilisator (Ca/Zn-Carboxylat) d) mit einem Stab so gemischt, dass die flüssigen Bestandteile vom Pulver gut aufgenommen wurden und nicht an dem Gefäß haften. Die so erhaltene Pulvermischung wurde portionsweise in den Walzenspalt (0,7 mm) eines Zweiwalzenstuhles bei 165°C Walzentemperatur gegeben und homogenisiert und geliert. Nach der Fellbildung wurde der Walzenspalt auf 1 mm erweitert. Das Mischergebnis wurde durchhäufiges Einschlagen des Walzfelles verbessert. Nach einer Misch- und Verarbeitungszeit von 10 Minuten wurde das Walzfell abgenommen. Nach Portionierung wurden Prüffolien gepresst (200 mm X 200 mm x 1 mm). Die Temperatur der Presse betrug 170 °C; die Presszeit betrug insgesamt 10 Minuten, davon Minuten Aufheizphase mit einem Druck < 10 bar und 3 Minuten Presszeit unter Hochdruck > 100 bar. Nach Abkühlen unter Druck in einer Kühlpresse auf maximal 30°C wurden die Prüfkörper entformt. Die Prüffolien wurden auf 0,0001 g genau ausgewogen. Hiernach wurde eine Prüffolie 14 Tage in einem Ofen bei 70° in mit Feuchtigkeit gesättigter Atmosphäre über Wasser gelagert. Nach Entnahme der Prüffolien werden diese von gegebenenfalls anhaftender Feuchtigkeit oder Tröpfchen befreit und nach 2 Tagen Konditionierung bei 20°C und 40% Luftfeuchtigkeit gewogen.

Von jeder Art der Folie vor und nach Ofenlagerung wurde ein S4 Stab ausgestanzt und im Zugversuch (Ametek Lloyd Instruments Reißmaschine LRSKplus, Abzugsgeschwindigkeit 200 mm/min) die Dehnung 100% vor und nach Lagerung bestimmt und als prozentuale Differenz zum Ausgangswert der nicht gelagerten Folie ausgewertet.

### Weichmachende Wirkung

Zur Bestimmung der weichmachenden Wirkung der erfindungsgemäßen Zusammensetzung wurden Walzfelle aus Polyvinylchlorid-Compounds der in Tabelle 1 angegebenen Zusammensetzung hergestellt. Aus den Walzfellen wurden Prüfkörper mit 35 mm Durchmesser gepresst, deren Shore-Härte mittels eines digitalen Shore-Härte-Testers (Zwick GmbH & Co. KG, Ulm) bestimmt wurde. Die Ergebnisse (Mittelwerte von jeweils fünf Messungen) dieser Prüfung sind in Tabelle 2 aufgeführt.

**Tabelle 1: Zusammensetzung (Gew.-Teile) der Mischungen für die Prüfkörper der erfindungsgemäßen Beispiele B1 und B2 und des Vergleichsbeispiels V1.**

| | V1 | B1 | B2 |
|---|---|---|---|
| PVC (c) | 100 | 100 | 100 |
| Adipinsäurepolyester (b) | 60 | 60 | 60 |
| Ca/Zn-Carboxylat (d) | 3 | 3 | 3 |
| CDI 1 (a) | 0 | 2 | 0 |
| CDI 2 (a) | 0 | 0 | 2 |

Mit CDI 1 = Carbodiimid der Formel (III) mit n = ca. 4 und R⁴ = -NHCOOR⁷ mit R⁷ = Cyclohexyl, mittlere Gewichts-Molmasse: ca. 6000 g/mol, D = 1,84. Mit CDI 2 = Carbodiimid der Formel (II) mit n = ca. 4 und R¹, R², R³ = jeweils unabhängig für Methyl- oder Ethyl, wobei jeder Benzolring nur eine Methyl-Gruppe aufweist, R⁴ = -NHCOOR⁷ mit R⁷ = Cyclohexyl, mittlere Gewichts-Molmasse: ca. 2500 g/mol, D = 1,85. Die jeweiligen Molmassen wurden bestimmt mittels GPC-Viskometrie.

**Tabelle 2: Die Shore-Härten der ungelagerten Prüfkörper, die Gewichtsdifferenzen der Prüfplatten und die Unterschiede in der 100% Dehnung der S4-Stäbe vor / nach Ofenlagerung in feuchtigkeitsgesättigter Atmosphäre der erfindungsgemäßen Beispiele B1 und B2 und des Vergleichsbeispiels V 1.**

| | V1 | B1 | B2 |
|---|---|---|---|
| Shore A | 82 | 81 | 81 |
| Gewichtsänderung der | - 0,6 % | +/-0,0 % | + 0,1 % |
| Prüfplatten nach Ofenlagerung | | | |
| Änderung Spannung 100% | 117% | 112% | 111% |
| Dehnung nach Ofenlagerung | | | |

### Auswertung der weichmachenden Wirkung

Die weichmachende Wirkung verschiedener Weichmacher bei gleichen Einsatzmengen kann anhand von Härtebestimmungen verglichen werden. Wie die Messergebnisse aus Tabelle 1 zeigen, können mit den erfindungsgemäßen Zusammensetzungen Polyvinylchlorid-Compounds hergestellt werden, deren Härtegrade durch Beimischung der Carbodiimide CDI 1 und CDI 2 (Beispiele B1 und B2) zum Vergleich (Beispiel V1) nicht negativ beeinträchtigt werden.

### Auswertung der Gewichtsänderung und Spannung 100% Dehnung

Durch den Zusatz der Komponente a) (Beispiele B1 und B2) wird der durch Luftfeuchtigkeit induzierte Abbau des Esters (Weichmachers) b) und die damit verbundene Gewichtsreduktion im Vergleich zum Beispiel V1 ohne aromatisches polymeres Carbodiimid verringert und die Änderung beziehungsweise die Erhöhung der Spannung bei 100% Dehnung reduziert.

### Auswertung

Es zeigt sich somit, dass die erfindungsgemäßen Zusammensetzungen die gewünschten weichmachenden Eigenschaften aufweisen, wobei die Hydrolyseempfindlichkeit des Esters wirksam durch das polymere aromatische Carbodiimid vor allem in PVC verhindert wird, siehe Tabelle 2.

### Verträglichkeitsuntersuchungen:

Hierzu wurde die zu prüfende weichmacherhaltige PVC-Pulvermischung auf einem Zweiwalzenstuhl homogenisiert, geliert und anschließend zu glatten Prüffolien gepresst und der Masseverlust bei feuchtheißer Lagerung bestimmt.

In einer Porzellanschale wurden 100 g Polyvinylchlorid (S-PVC, K 70), mit 100 phr (Gewichtsteile pro 100 Gewichtsteile PVC) Weichmacher, 3 phr Ca/Zn-Carboxylat als PVC-Stabilisator und gegebenenfalls 2 phr CDI 2 mit einem Stab so gemischt, dass die flüssigen Bestandteile vom Pulver gut aufgenommen werden und nicht an dem Gefäß hafteten. Die so erhaltene Pulvermischung wurde portionsweise in den Walzenspalt (0,7 mm) eines Zweiwalzenstuhles bei 165°C Walzentemperatur gegeben und homogenisiert und geliert. Nach der Fellbildung wurde der Walzenspalt auf 1 mm erweitert. Das Mischergebnis wurde durch häufiges Einschlagen des Walzfelles verbessert. Nach einer Misch- und Verarbeitungszeit von 10 Minuten wurde das Walzfell abgenommen. Nach Portionierung wurde 1 mm starke Prüffolien gepresst. Die Temperatur der Presse betrug 170 °C; die Presszeit betrug insgesamt 10 Minuten, davon 7 Minuten Aufheizphase mit einem Druck < 10 bar und 3 Minuten Presszeit unter Hochdruck > 100 bar. Nach Abkühlen unter Druck in einer Kühlpresse auf maximal 30°C wurden die Prüfkörper entformt und Platten der Dimension 200 mm x 100 mm geschnitten. Die Prüffolien wurden auf 0,0001 g genau ausgewogen.Die Folien wurden in einem gut verschließbaren Glasbehälter aufgehängt und 28 Tage bei 70 °C über Wasser gelagert. Nach 28 Tagen wurden die Folien der Glaswanne entnommen und für 1 Stunde frei hängend an der Luft klimatisiert. Danach wurden die Folien mit Methanol oberflächlich gereinigt. Anschließend wurden die Folien für 16 Stunden bei 70°C in einem Trockenschrank mit Zwangskonvektion frei hängend getrocknet. Nach Entnahme aus dem Trockenschrank wurden die Folien für 1 Stunde frei hängend klimatisiert und anschließend gewogen. Ein niedriger Prozentgehalt des Gewichtsverlustes der Prüffolien ist eine Aussage über die geringere Flüchtigkeit, geringere Emission und gute Resistenz des Weichmachers gegen Exsudation und über das stabilisierende Verhalten des erfindungsgemäßen Carbodiimids CDI 2.

Die Vergleichsversuche 1, 3 und 5 ohne Carbodiimid (sieheTabelle 3) zeigen einen hohem Gewichtsverlust für den Prüfkörper mit hohem Anteil an polymeren Adipinsäurepolyester und eine Abnahme des Gewichtsverlustes in Abhängigkeit von der Zugabe des monomeren Adipinsäureesters, hier Di (2-ethylhexyl) adipat.

**Tabelle 3: Vergleichsbeispiele ohne Carbodiimid**

| Zusammensetzung [w/w] | 1 (V) | 2(erf) | 3 (V) | 4 (erf) | 5 (V) | 6 (erf) |
|---|---|---|---|---|---|---|
| Suspensions PVC (K 70) * | 100 | 100 | 100 | 100 | 100 | 100 |
| Calciumzink Stabilisator ** | 3 | 3 | 3 | 3 | 3 | 3 |
| Adipinsäurepolyester *** | 100 | 100 | 80 | 80 | 0 | 0 |
| Di (2-ethylhexyl) adipat **** | 0 | 0 | 20 | 20 | 100 | 100 |
| CDI 2 | 0 | 2 | 0 | 2 | 0 | 2 |
| Ergebnis nach Lagerung in feuchtheißer Umgebung Gewichtsdifferenz [%] | - 22,3 | - 12,5 | - 15,7 | - 5,0 | - 0,8 | - 0,3 |

| | | | | | | |
|---|---|---|---|---|---|---|
| * Vinnolit S 4170 der Firma Vinnolit GmbH & Co. KG ** Mark CZ11 der Firma Galata Chemicals GmbH *** Ultramoll IV der Firma Lanxess Deutschland GmbH **** Adimoll DO der Lanxess Deutschland GmbH | | | | | | |

Die erfindungsgemäßen Mischungen in den Beispielen 2, 4 und 6 (Tabelle 3) zeigen im direkten Vergleich mit den Beispielen 1, 3 und 5 eine überraschend niedrigere Gewichtsabnahme bei Lagerung in feuchtheißem Klima, also eine höhere Beständigkeit gegen Hydrolyse, Emission und Flüchtigkeit.

## Patentansprüche

1. Zusammensetzung enthaltend
(a) mindestens ein polymeres aromatisches Carbodiimid, der Formel (I)
R⁴-R⁸-(-N=C=N-R⁸-)ₘ-R⁴ (I),
in dem
m einer ganzen Zahl von 2 bis 500 entspricht,
R⁸ C₁-C₁₂-Alkyl- substituierte Arylene, C₇-C₁₈-Alkylaryl-substituierte Arylene sowie gegebenenfalls C₁-C₁₂-Alkyl- substituierte über Alkylengruppen verbrückte Arylene, die in Summe 7 bis 30 Kohlenstoffatome aufweisen, sowie Arylen,
und
R⁴ -NCO, -NCNR⁵, -NHCONHR⁵, -NHCONR⁵R⁶ oder -NHCOOR⁷ ist, wobei R⁵ und R⁶ gleich oder verschieden sind und einen C₁-C₁₂-Alkyl-, C₆-C₁₂-Cycloalkyl-, C₇-C₁₈-Aralkyl- oder Arylrest darstellen und R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 Kohlenstoffatomen oder ein Alkoxypolyoxyalkylenrest entspricht,
(b) mindestens einen Ester ausgewählt aus der Gruppe der C₉-C₁₀-Alkylester der Benzoesäure, Di- (C₈-C₁₂)-Alkylester aliphatischer Dicarbonsäuren, Polyester von aliphatischen Dicarbonsäuren oder Gemische dieser Dicarbonsäuren mit C₂-C₈-aliphatischen Diolen oder Polyolen, deren Endgruppen unverestert oder mit monofunktionellen Verbindungen, verestert sind und deren zahlenmittlere Molmasse 1 000 - 20 000 g/mol beträgt, Tri(C₂-C₆)-alkylester der Zitronensäure, acetylierte Tri(C₂-C₆)-alkylester der Zitronensäure, Glycerinester, Benzoesäurediester von Mono-, Di-, Tri- oder Poly(C₂-C₃)-alkylenglycolen, Trimethylolpropanester, Pentaerythritolester, Di(C₈-C₁₂)-alkylester von Cyclohexandicarbonsäuren, Di(C₄-C₁₂)-alkylester der Terephthalsäure, Di(C₈-C₁₂)-alkylester der Phthalsäure, Tri(C₈-C₁₂)-alkylester der Trimellitsäure, Tri(C₆-C₁₀)-arylester der Phosphorsäure, Di(C₆-C₁₀)-aryl(C₈-C₁₂)-alkylester der Phosphorsäure, Tri(C₈-C₁₂)-alkylester der Phosphorsäure, oder (C₆-C₁₀)-Arylester von C₁₀-C₂₁-Alkansulfonsäuren und
(c) Polyvinylchlorid oder Polyvinylbutyral.

2. Zusammensetzung nach Anspruch 1 , **dadurch gekennzeichnet, dass** es sich bei den polymeren aromatischen Carbodiimiden um Verbindungen der Formel (II) handelt, 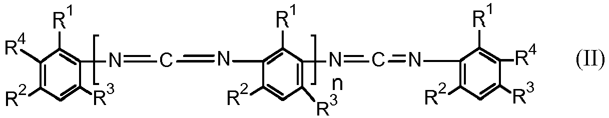
bei denen R⁴ ausgewählt ist aus der Gruppe der -NHCONHR⁵, -NHCONR⁵R⁶ oder -NHCOOR⁷ ist,
wobei R⁵ und R⁶ gleich oder verschieden sind und einen C₁-C₁₂-Alkyl-, C₆-C₁₂-Cycloalkyl-,C₇ - C₁₈ -Aralkylrest - oder Arylrest darstellen
R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 Kohlenstoffatomen oder einem Alkoxypolyoxyalkylenrest entspricht,
R¹, R² und R³ jeweils unabhängig für Methyl- oder Ethyl steht, wobei jeder Benzolring nur eine Methyl-Gruppe aufweist und n = 1 bis 10 bedeutet.

3. Zusammensetzung nach Anspruch 1 , **dadurch gekennzeichnet, dass** es sich bei den polymeren aromatischen Carbodiimiden um Verbindungen der Formel (III) handelt 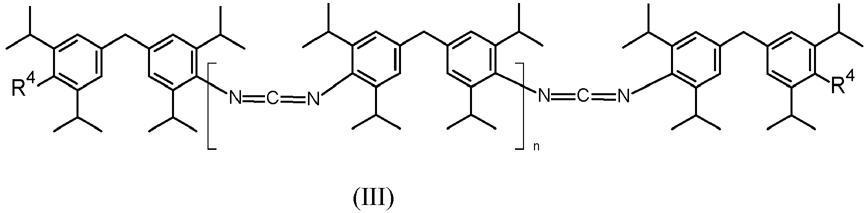 in der
R⁴ ausgewählt ist aus der Gruppe der -NHCONHR⁵, -NHCONR⁵R⁶ oder -NHCOOR⁷ ist, wobei R⁵ und R⁶ gleich oder verschieden sind und einen C₁-C₁₂-Alkyl-, C₆-C₁₂-Cycloalkyl-, C₇ - C₁₈ -Aralkylrest - oder C₆ - C₁₈ -Arylrest darstellen, R⁷ einem C₁ - C₂₂ - Alkyl-, C₆ - C₁₂ -Cycloalkyl-, C₆ - C₁₈ -Aryl oder C₇ - C₁₈ -Aralkylrest, sowie einem ungesättigten Alkylrest mit 2 - 22 Kohlenstoffatomen oder ein Alkoxypolyoxyalkylenrest entspricht, und
n = 1 bis 20 ist.

4. Zusammensetzung nach Anspruch 1 bis 3, **dadurch gekennzeichnet, dass** es sich bei dem Ester b) um Polyester von 1,2-Propandiol und/oder 1,3- und/oder 1,4-Butandiol und/oder Diethylenglykol und/oder Dipropylenglykol und/oder Polypropylenglykol und/oder Glyzerin und/oder Pentaerythritol und/oder 2,2-Dimethyl-1,3-propandiol mit Adipinsäure und/oder Sebazinsäure und/oder Bernsteinsäure und/oder Phthalsäure, gegebenenfalls auch mit endständiger Essigsäure, und/oder C₁₀-C₁₈-Fettsäuren, und/oder 2-Ethylhexanol, und/oder Isononanol und/oder n-Octanol und/oder n-Decanol sowie Di (2-ethylhexyl) adipat, Di isononyl adipat, Dipropylheptylphthalat, Diisononylphthalat, 1,2-Cyclohexandicarbonsäurediisononylester, 1,2-Cyclohexandicarbonsäuredi (2-ethylhexyl)ester, Pentaerythritol tetravalerat und Di (2-ethylhexyl) terephthalat, Tri (2-ethylhexyl) trimellitat, Diphenyl isodecyl phosphat, Diphenyl 2-ethylhexyl phosphat, Isopropylphenyl diphenyl phosphat, tert. Butylphenyl diphenyl phosphat und (C₁₀-C₂₁)-Alkansulfonsäurephenylester handelt.

5. Zusammensetzung nach einem der Ansprüche 1 bis 4, **dadurch gekennzeichnet, dass** das Verhältnis von (b) zu (a) 200 : 1 bis 10 : 1 Gewichtsteile beträgt.

6. Zusammensetzung nach einem der Ansprüche 1 bis 5, **dadurch gekennzeichnet, dass** die Zusammensetzung Polyvinylchlorid oder Polyvinylbutyral c), polymeres aromatisches Carbodiimid a), mindestens einen oder mehrere Ester b) mit 200 Gewichtsteilen eines oder mehrerer Ester : 1 Gewichtsteil polymeres aromatisches Carbodiimid bis 10 Gewichtsteile eines oder mehrerer Ester : 1 Gewichtsteil polymeres aromatisches Carbodiimid enthält und die Summe aus polymerem aromatischem Carbodiimid und einem oder mehreren Ester(n) einer Menge von 10 - 100 Gewichtsteilen pro 100 Gewichtsteile Polyvinylchlorid entspricht.

7. Zusammensetzung gemäß einem der Ansprüche 1 bis 6, **dadurch gekennzeichnet, dass** ein oder mehrere Zusatzstoffe d) ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel und/oder Schlagzähverbesserer, eingesetzt werden.

8. Verfahren zur Herstellung der Zusammensetzung nach einem der Ansprüche 1 bis 7, **dadurch gekennzeichnet, dass** die Komponenten a) und b) zusammen gemischt werden und dann die Komponenten c) und gegebenenfalls ein oder mehrere Zusatzstoffe d) zugemischt werden.

9. Verwendung der Zusammensetzung gemäß einem der Ansprüche 1 bis 7 zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, Kunstleder, Spielzeug, Verpackungsbehältern, Klebebandfolien, Bekleidung, Beschichtungen, sowie Fasern für Gewebe.

## Claims

1. Composition comprising
(a) at least one polymeric aromatic carbodiimide of formula (I)
R⁴-R⁸-(-N=C=N-R⁸-)ₘ-R⁴ (I),
in which
m represents an integer from 2 to 500,
R⁸ is C₁-C₁₂-alkyl-substituted arylenes, C₇-C₁₈-alkylaryl-substituted arylenes and optionally C₁-C₁₂-alkyl-substituted alkylene-bridged arylenes comprising a total of 7 to 30 carbon atoms, and arylene,
and
R⁴ is -NCO, -NCNR⁵, -NHCONHR⁵, -NHCONR⁵R⁶ or-NHCOOR⁷, wherein R⁵ and R⁶ are identical or different and represent a C₁-C₁₂-alkyl, C₆-C₁₂-cycloalkyl, C₇-C₁₈-aralkyl or aryl radical and R⁷ represents a C₁-C₂₂-alkyl, C₆-C₁₂-cycloalkyl, C₆-C₁₈-aryl or C₇-C₁₈-aralkyl radical and an unsaturated alkyl radical having 2 - 22 carbon atoms or an alkoxypolyoxyalkylene radical,
(b) at least one ester selected from the group comprising C₉-C₁₀-alkyl esters of benzoic acid, di- (C₈-C₁₂) -alkyl esters of aliphatic dicarboxylic acids, polyesters of aliphatic dicarboxylic acids, or mixtures of these dicarboxylic acids with C₂-C₈-aliphatic diols or polyols, the end groups of which are non-esterified or have been esterified with monofunctional compounds, and the number-average molar mass of which is 1000 - 20 000 g/mol, tri(C₂-C₆)-alkyl esters of citric acid, acetylated tri (C₂-C₆) -alkyl esters of citric acid, glycerol esters, benzoic acid diesters of mono-, di-, tri- or poly(C₂-C₃)-alkylene glycols, trimethylolpropane esters, pentaerythritol esters, di(C₈-C₁₂)-alkyl esters of cyclohexanedicarboxylic acids, di(C₄-C₁₂)-alkyl esters of terephthalic acid, di(C₈-C₁₂)-alkyl esters of phthalic acid, tri(C₈-C₁₂)-alkyl esters of trimellitic acid, tri(C₆-C₁₀)-aryl esters of phosphoric acid, di(C₆-C₁₀)-aryl(C₈-C₁₂)-alkyl esters of phosphoric acid, tri(C₈-C₁₂)-alkyl esters of phosphoric acid, or (C₆-C₁₀)-aryl esters of C₁₀-C₂₁-alkanesulfonic acids and
(c) polyvinyl chloride or polyvinyl butyral.

2. Composition according to Claim 1, **characterized in that** the polymeric aromatic carbodiimides are compounds of formula (II), 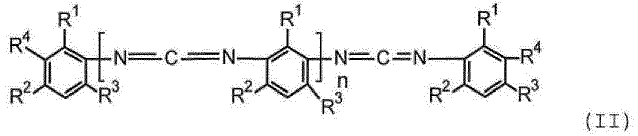
where R⁴ is selected from the group comprising-NHCONHR⁵, -NHCONR⁵R⁶ or -NHCOOR⁷,
wherein R⁵ and R⁶ are identical or different and represent a C₁-C₁₂-alkyl, C₆-C₁₂-cycloalkyl, C₇-C₁₈-aralkyl radical or aryl radical,
R⁷ represents a C₁-C₂₂-alkyl, C₆-C₁₂-cycloalkyl, C₆-C₁₈-aryl or C₇-C₁₈-aralkyl radical, and an unsaturated alkyl radical having 2-22 carbon atoms or an alkoxypolyoxyalkylene radical,
R¹, R² and R³ each independently represent methyl or ethyl, wherein each benzene ring bears only one methyl group and n = 1 to 10.

3. Composition according to Claim 1, **characterized in that** the polymeric aromatic carbodiimides are compounds of formula (III) 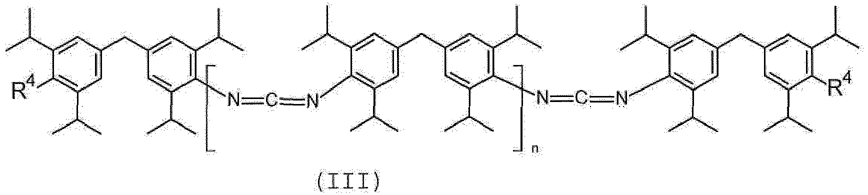 in which
R⁴ is selected from the group comprising -NHCONHR⁵, -NHCONR⁵R⁶ or -NHCOOR⁷,
wherein R⁵ and R⁶ are identical or different and represent a C₁-C₁₂-alkyl, C₆-C₁₂-cycloalkyl, C₇-C₁₈-aralkyl radical or C₆-C₁₈-aryl radical,
R⁷ represents a C₁-C₂₂-alkyl, C₆-C₁₂-cycloalkyl, C₆-C₁₈-aryl or C₇-C₁₈-aralkyl radical, and an unsaturated alkyl radical having 2-22 carbon atoms or an alkoxypolyoxyalkylene radical, and
n = 1 to 20.

4. Composition according to Claims 1 to 3, **characterized in that** the ester b) is a polyester of 1,2-propanediol and/or 1,3- and/or 1,4-butanediol and/or diethylene glycol and/or dipropylene glycol and/or polypropylene glycol and/or glycerol and/or pentaerythritol and/or 2,2-dimethyl-1,3-propanediol with adipic acid and/or sebacic acid and/or succinic acid and/or phthalic acid, optionally also end-capped with acetic acid, and/or C₁₀-C₁₈-fatty acids, and/or 2-ethylhexanol, and/or isononanol and/or n-octanol and/or n-decanol and also di(2-ethylhexyl) adipate, diisononyl adipate, dipropylheptyl phthalate, diisononyl phthalate, diisononyl 1,2-cyclohexanedicarboxylate, di(2-ethylhexyl) 1,2-cyclohexanedicarboxylate, pentaerythritol tetravalerate and di(2-ethylhexyl) terephthalate, tri(2-ethylhexyl) trimellitate, diphenyl isodecyl phosphate, diphenyl 2-ethylhexyl phosphate, isopropylphenyl diphenyl phosphate, tert-butylphenyl diphenyl phosphate and phenyl (C₁₀-C₂₁)-alkanesulfonate.

5. Composition according to any of Claims 1 to 4, **characterized in that** the ratio of (b) to (a) is 200 : 1 to 10 : 1 parts by weight.

6. Composition according to any of Claims 1 to 5, **characterized in that** the composition comprises polyvinyl chloride or polyvinylbutyral c), polymeric aromatic carbodiimide a), at least one or more esters b) with 200 parts by weight of one or more esters : 1 part by weight of polymeric aromatic carbodiimide to 10 parts by weight of one or more esters : 1 part by weight of polymeric aromatic carbodiimide and the sum total of polymeric aromatic carbodiimide and one or more ester(s) corresponds to an amount of 10 - 100 parts by weight per 100 parts by weight of polyvinyl chloride.

7. Composition according to any of Claims 1 to 6, **characterized in that** one or more additives d) are used, selected from the group comprising PVC stabilizers, lubricants, fillers, pigments, flame retardants, light stabilizers, blowing agents, polymeric processing aids and/or impact modifiers.

8. Process for producing the composition according to any of Claims 1 to 7, **characterized in that** the components a) and b) are mixed together and then the components c) and optionally one or more additives d) are mixed in.

9. Use of the composition according to any of Claims 1 to 7 for producing pipelines, cables, wire sheathings, in interior construction, in vehicle and furniture construction, in floor coverings, medical articles, food packaging, gaskets, films, composite films, films for composite safety glass, synthetic leather, toys, packaging containers, adhesive strip films, clothing, coatings, and also fibers for fabric.

## Revendications

1. Composition contenant
(a) au moins un carbodiimide aromatique polymérique, de formule (I)
R⁴-R⁸-(-N=C=N-R⁸-)ₘR⁴ (I),
dans lequel
m correspondant à nombre entier de 2 à 500,
R⁸ sont des arylènes substitués par C₁₋₁₂-alkyle, des arylènes substitués par C₇₋₁₈-alkylaryle, des arylènes pontés par des groupes alkylène éventuellement substitués par C₁₋₁₂-alkyle, qui présentent au total 7 à 30 atomes de carbone, ainsi qu'arylène
et
R⁴ est -NCO, -NCNR⁵, -NHCONHR⁵, -NHCONR⁵R⁶ ou -NHCOOR⁷,
R⁵ et R⁶ étant identiques ou différents et représentant un radical C₁₋₁₂-alkyle, C₆₋₁₂-cycloalkyle, C₇₋₁₈-aralkyle ou aryle et R⁷ correspondant à un radical C₁₋₂₂-alkyle, C₆₋₁₂-cycloalkyle, C₆₋₁₈-aryle ou C₇₋₁₈-aralkyle, ainsi qu'à un radical alkyle insaturé comportant 2 à 22 atomes de carbone ou un à radical alcoxypolyoxyalkylène,
(b) au moins un ester choisi dans le groupe des C₉₋₁₀-alkylesters de l'acide benzoïque, des di-C₈₋₁₂-alkylesters d'acides dicarboxyliques aliphatiques, des polyesters d'acides dicarboxyliques aliphatiques ou des mélanges de ces acides dicarboxyliques avec des diols C₂₋₈-aliphatiques ou des polyols, dont les groupes terminaux ne sont pas estérifiés ou sont estérifiés avec des composés monofonctionnels et dont la masse molaire moyenne en nombre est de 1000 à 20 000 g/mole, des tri-C₂₋₆-alkylesters de l'acide citrique, des triC₂₋₆-alkylesters acétylés de l'acide citrique, des esters de glycérine, des diesters de mono-, di-, tri- ou poly-C₂₋₃-alkylènegycol(s) de l'acide benzoïque, des esters de triméthylolpropane, des esters de pentaérythritol, des di-C₈₋₁₂-alkylesters d'acides cyclohexanedicarboxyliques, des di-C₄₋₁₂-alkylesters de l'acide téréphtalique, des di-C₈₋₁₂-alkylesters de l'acide phtalique, des tri-C₈₋₁₂-alkylesters de l'acide trimellitique, des tri-C₆₋₁₀-arylesters de l'acide phosphorique, des di-C₆₋₁₀-aryl-C₈₋₁₂-alkylesters de l'acide phosphorique, des tri-C₈₋₁₂-alkylesters de l'acide phosphorique, ou d'un C₆₋₁₀-arylester d'acides C₁₀₋₂₁-alcanesulfoniques et
(c) du poly(chlorure de vinyle) ou du poly(butyral de vinyle) .

2. Composition selon la revendication 1, **caractérisée en ce que** les carbodiimides aromatiques polymériques sont des composés de formule (II), 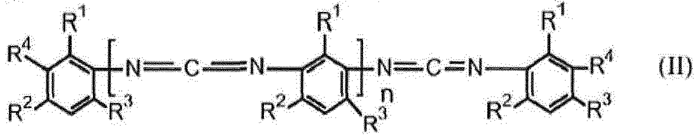
dans lesquels R⁴ est choisi dans le groupe de-NHCONHR⁵, -NHCONR⁵R⁶ ou -NHCOOR⁷,
R⁵ et R⁶ étant identiques ou différents et représentant un radical C₁₋₁₂-alkyle, C₆₋₁₂-cycloalkyle, C₇₋₁₈-aralkyle ou aryle
R⁷ correspondant à un radical C₁₋₂₂-alkyle, C₆₋₁₂-cycloalkyle, C₆₋₁₈-aryle ou C₇₋₁₈-aralkyle, ainsi qu'à un radical alkyle insaturé comportant 2 à 22 atomes de carbone ou à un radical alcoxypolyoxyalkylène,
R¹, R² et R³ représentant à chaque fois indépendamment méthyle ou éthyle, chaque cycle benzénique ne présentant qu'un groupe méthyle et n = 1 à 10.

3. Composition selon la revendication 1, **caractérisée en ce que** les carbodiimides aromatiques polymériques sont des composés de formule (III) 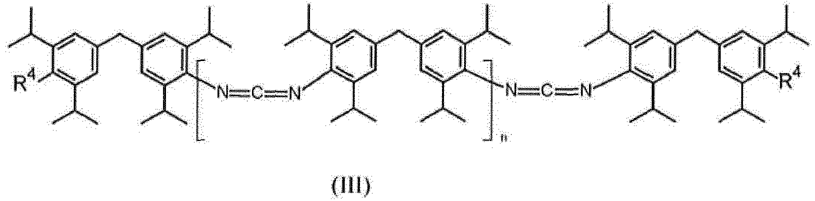 dans laquelle
R⁴ est choisi dans le groupe de -NHCONHR⁵,-NHCONR⁵R⁶ ou -NHCOOR⁷,
R⁵ et R⁶ étant identiques ou différents et représentant un radical C₁₋₁₂-alkyle, C₆₋₁₂-cycloalkyle, C₇₋₁₈-aralkyle ou C₆₋₁₈-aryle,
R⁷ correspondant à un radical C₁₋₂₂-alkyle, C₆₋₁₂-cycloalkyle, C₆₋₁₈-aryle ou C₇₋₁₈-aralkyle, ainsi qu'à un radical alkyle insaturé comportant 2 à 22 atomes de carbone ou à un radical alcoxypolyoxyalkylène, et
n = 1 à 20.

4. Composition selon les revendications 1 à 3, **caractérisée en ce que** l'ester b) est un polyester de 1,2-propanediol et/ou de 1,3- et/ou de 1,4-butanediol et/ou de diéthylèneglycol et/ou de dipropylèneglycol et/ou de polypropylèneglycol et/ou de glycérine et/ou de pentaérythritol et/ou de 2,2-diméthyl-1,3-propanediol avec l'acide adipique et/ou l'acide sébacique et l'acide succinique et/ou l'acide phtalique, éventuellement également avec une terminaison de type acide acétique, et/ou d'acides gras en C₁₀₋₁₈, et/ou de 2-éthylhexanol, et/ou d'isononanol et/ou de n-octanol et/ou de n-décanol ainsi que d'adipate di(2-éthylhexyle), d'adipate de diisononyle, de phtalate de dipropylheptyle, de phtalate de diisononyle, de 1,2-cyclohexanedicarboxylate de diisononyle, de 1,2-cyclohexanedicarboxylate de di(2-éthylhexyle), de tétravalérate de pentaérythritol et de téréphtalate de di(2-éthylhexyle), de trimellitate de tri(2-éthylhexyle), de phosphate de diphényle et d'isodécyle, de phosphate de diphényle et de 2-éthylhexyle, de phosphate d'isopropylphényle et de diphényle, de phosphate de tert-butylphényle et de diphényle et de C₁₀₋₂₁-alcanesulfonate de phényle.

5. Composition selon l'une quelconque des revendications 1 à 4, **caractérisée en ce que** le rapport de (b) à (a) est de 200:1 à 10:1.

6. Composition selon l'une quelconque des revendications 1 à 5, **caractérisée en ce que** la composition contient du poly(chlorure de vinyle) ou du poly(butyral de vinyle) c), un carbodiimide aromatique polymérique a), au moins un ou plusieurs esters b) avec 200 parties en poids d'un ou plusieurs esters : 1 partie en poids de carbodiimide aromatique polymérique à 10 parties en poids d'un ou plusieurs esters : 1 partie en poids de carbodiimide aromatique polymérique et la somme du carbodiimide aromatique polymérique et d'un ou plusieurs ester(s) correspond à une quantité de 10 à 100 parties en poids pour 100 parties en poids de poly(chlorure de vinyle).

7. Composition selon l'une quelconque des revendications 1 à 6, **caractérisé en ce qu'**un ou plusieurs additifs d) choisis dans le groupe des stabilisateurs de PVC, des lubrifiants, des charges, des pigments, des agents ignifugeants, des photostabilisateurs, des agents propulseurs, des adjuvants de traitement polymériques et/ou des modificateurs d'impact, sont utilisés.

8. Procédé pour la préparation de la composition selon l'une quelconque des revendications 1 à 7, **caractérisé en ce que** les composants a) et b) sont mélangés ensemble et ensuite les composants c) et éventuellement un ou plusieurs additifs d) sont mélangés.

9. Application de la composition selon l'une quelconque des revendications 1 à 7 pour la préparation de canalisations, de câbles, de gaines de fil, dans l'aménagement intérieur, dans la construction automobile et la construction de meubles, dans des revêtements de sol, dans des articles médicaux, dans des emballages de produits alimentaires, dans des joints, dans des feuilles, dans des feuilles composites, dans des feuilles pour des vitres de sécurité composites, dans du cuir synthétique, dans un jouet, dans des récipients d'emballage, dans des feuilles pour ruban adhésif, dans des vêtements, dans des revêtements, ainsi que dans les fibres pour tissus.
